# EUROPÄISCHE PATENTSCHRIFT

(11) **EP 1 779 001 B1**
(45) Veröffentlichungstag und Bekanntmachung des Hinweises auf die Patenterteilung: **18.01.2012**
(21) Anmeldenummer: 05771821.5
(22) Anmeldetag: 16.07.2005
(51) Int. Cl.: F16H 7/08

(54) **HYDRAULISCHE SPANNVORRICHTUNG FÜR EINEN ZUGMITTELTRIEB**
HYDRAULIC TENSIONING DEVICE FOR A TRACTION MECHANISM DRIVE
DISPOSITIF DE SERRAGE HYDRAULIQUE POUR MECANISME A ELEMENTS DE TRACTION

(30) Priorität: 19.08.2004 DE 102004040222
(43) Veröffentlichungstag der Anmeldung: 02.05.2007
(73) Patentinhaber: Schaeffler Technologies GmbH & Co. KG, 91074 Herzogenaurach (DE)
(72) Erfinder: KOCH, Reinhard, 96193 Wachenroth (DE)
(86) Internationale Anmeldenummer: PCT/EP2005/007775
(87) Internationale Veröffentlichungsnummer: WO 2006/021271

(56) Entgegenhaltungen:
- EP-A- 0 952 375
- EP-A- 1 067 314
- EP-A- 1 101 975
- WO-A-98/05883
- US-A- 3 483 888
- US-A- 4 700 741
- US-A- 4 756 335
- US-B1- 6 193 623
- PATENT ABSTRACTS OF JAPAN Bd. 2003, Nr. 12, 5. Dezember 2003 (2003-12-05) & JP 2004 176821 A (NTN CORP), 24. Juni 2004 (2004-06-24)

## Beschreibung

### Gebiet der Erfindung

Die Erfindung betrifft eine hydraulische Spannvorrichtung für einen Zugmitteltrieb, insbesondere für einen Ketten- oder Riementrieb einer Brennkraftmaschine, mit einem in einem Zylinder beweglich geführten Spannkolben, einem durch den Spannkolben und den Zylinder festgelegten Druckraum zur Aufnahme von Hydraulikflüssigkeit und einem den Druck in dem Druckraum begrenzenden Überdruckventil, das zumindest teilweise aus einer vormontierten, in den Spannkolben einsetzbaren oder eingesetzten Baugruppe besteht, die einen Aufnahmekörper als feststehendes Ventilelement umfasst, der mit einem ein bewegliches Ventilelement aufnehmenden Käfig verbunden ist, der zumindest auf einer Seite einen oder mehrere Vorsprünge aufweist, durch den oder die das bewegliche Ventilelement im Inneren des Käfigs gehalten wird.

### Hintergrund der Erfindung

In der DE 40 35 823 C1 wird eine hydraulische Spannvorrichtung für Zugmitteltriebe wie Ketten- oder Riementriebe in Brennkraftmaschinen beschrieben. Ein gegen die Kette angedrückter Spannkolben ist in einem Zylinder längsverschieblich aufgenommen. Der Spannkolben und der Zylinder begrenzen einen Druckraum zur Aufnahme von Hydraulikflüssigkeit. Spannbewegungen des Spannkolbens in Richtung auf die Kette bewirken eine Vergrößerung des Druckraums, wobei infolge des sich darin einstellenden Unterdrucks ein Rückschlagventil öffnet und Motoröl in den Druckraum einströmen lässt. Unter einer Spannung der Kette wird der Spannkolben einwärts, also weg von der Kette gedrückt, wobei der Druckraum verkleinert wird. Während sich der Spannkolben einwärts bewegt, wird Motoröl aus dem Druckraum heraus durch einen Leckspalt verdrängt. Das Dämpfungsverhalten der Spannvorrichtung kann durch die Größe des Leckspalts beeinflusst werden. Wenn der Druck im Druckraum zu groß wird, öffnet das Überdruckventil.

Ein ähnlicher Kettenspanner ist aus der DE 100 38 606 A1 bekannt. Das Überdruckventil dieses Kettenspanners besteht im Wesentlichen aus einer Ventilkugel, die von einer Druckfeder gegen einen Ventilsitz gedrückt wird, der an einer Buchse im Inneren des Spannkolbens ausgebildet ist. Wenn der Druck im Inneren des Druckraums eine festgelegte Grenze überschreitet, wird die Ventilkugel gegen die Kraft der Ventilfeder verschoben, sodass das Motoröl aus dem Kolben entweichen kann. Beim Zusammenbau des Kettenspanners befindet sich der Kolben in senkrechter Lage und die Ventilfeder wird in das Innere des Kolbens eingesetzt. Da die Ventilfeder in diesem Zustand nicht vorgespannt ist, muss die Ventilkugel auf der Ventilfeder balanciert werden, bis weitere Komponenten montiert sind. Es ist daher sehr schwierig, einen derartigen Kettenspanner mit einem Montageautomaten zu montieren, ohne dass Störungen auftreten.

Eine gattungsgemäße hydraulische Spannvorrichtung für einen Zugmitteltrieb ist aus der US-B1-6 193 623 bekannt. In der US 3,483,888 wird ein Kugelrückschlagventil mit einem mittels eines Käfigs gehaltenen Ventilelement beschrieben.

### Zusammenfassung der Erfindung

Der Erfindung liegt daher das Problem zugrunde, eine hydraulische Spannvorrichtung für einen Zugmitteltrieb anzugeben, die einfach und sicher montiert werden kann.

Zur Lösung dieses Problems ist bei einer hydraulischen Spannvorrichtung für einen Zugmitteltrieb der eingangs genannten Art vorgesehen, dass der Käfig vorzugsweise ringförmig ausgebildet ist und zwei gegenüberliegende Vorsprünge aufweist, wobei die Vorsprünge auf beiden Käfigseiten ausgebildet sind.

Durch die Verwendung der erfindungsgemäß vorgesehenen Baugruppe, die zumindest Teile des Überdruckventils umfasst, erübrigt es sich, die Ventilkugel auf der Ventilfeder bei der Montage zu balancieren. Gleichzeitig wird durch die Baugruppe automatisch sichergestellt, dass die Kugel richtig an der Ventilfeder anliegt, ein weiterer Vorteil ist darin zu sehen, dass die Baugruppe mit einem Montageautomaten montiert werden kann.

Erfindungsgemäß ist vorgesehen, dass die Baugruppe einen Aufnahmekörper als feststehendes Ventilelement umfasst, der mit einem ein bewegliches Ventilelement aufnehmenden Käfig verbindbar oder verbunden ist. Die Baugruppe umfasst somit den Aufnahmekörper, den Käfig und das bewegliche Ventilelement, diese Komponenten werden vormontiert und als Baugruppe in den Spannkolben eingesetzt. Die Baugruppe ist dabei so ausgebildet, dass sie immer richtig auf der Ventilfeder aufliegt.

Bei der erfindungsgemäßen Spannvorrichtung wird es bevorzugt, dass das bewegliche Ventilelement als Ventilkugel ausgebildet ist. Daneben sind weitere Bauformen denkbar, beispielsweise könnte das bewegliche Ventilelement als Konus ausgebildet sein.

Eine besonders hohe Zuverlässigkeit der erfindungsgemäßen Spannvorrichtung wird erzielt, wenn an dem Aufnahmekörper für den Käfig ein Ventilsitz ausgebildet ist, der durch das bewegliche Ventilelement abdichtbar ist. Bei herkömmlichen Spannvorrichtungen wird der Ventilsitz zumeist durch ein weiteres separates Bauteil realisiert, demgegenüber kann ein zusätzliches Bauteil bei der erfindungsgemäßen Spannvorrichtung entfallen, da der Aufnahmekörper einerseits den Käfig für das bewegliche Ventilelement aufnimmt, andererseits weist er den Ventilsitz auf.

In diesem Zusammenhang ist es auch besonders vorteilhaft, dass die erfindungsgemäße Spannvorrichtung eine Drosselbohrung an dem Aufnahmekörper aufweisen kann. Bislang wurde diese Drosselbohrung mittels eines separaten Teils realisiert, das nun entfallen kann.

Eine einwandfreie Funktion der erfindungsgemäßen Spannvorrichtung wird dadurch gewährleistet, dass der Käfig zumindest auf einer Seite einen oder mehrere Vorsprünge aufweist, durch den oder die das bewegliche Ventilelement im Inneren des Käfigs gehalten wird. Bei der Montage der Baugruppe kann das bewegliche Ventilelement über die Vorsprünge in den Käfig hinein gedrückt werden. Der Käfig hat keinen Einfluss auf die Funktion des beweglichen Ventilelements sondern dient lediglich der Sicherung des Ventilelements während der Montage. Der Käfig ist vorzugsweise ringförmig ausgebildet und weist zumindest auf einer Käfigseite zwei gegenüberliegende Vorsprünge auf. Die beiden Vorsprünge verhindern, dass das bewegliche Ventilelement sich aus dem Käfig hinausbewegt.

Um die Montage der Baugruppe der erfindungsgemäßen Spannvorrichtung weiter zu vereinfachen, kann es vorgesehen sein, dass die gegenüberliegenden Vorsprünge auf beiden Käfigseiten ausgebildet sind. Da der Käfig zu seiner Mittelebene symmetrisch ist, kann eine aufwändige Positionierung vor dem Einbringen des beweglichen Ventilelements entfallen.

Bei der erfindungsgemäßen Spannvorrichtung kann die Befestigung des Käfigs in dem Aufnahmekörper so erfolgen, dass der Käfig kraft- und/oder formschlüssig in den Aufnahmekörper einsetzbar oder eingesetzt ist. Es ist möglich, dass die Außenkontur des Käfigs unrund, insbesondere polygonförmig, ausgebildet ist, wodurch weitere Befestigungselemente entfallen können. Bei anderen Ausführungen kann der Käfig Haltevorsprünge oder Haltenasen an seiner Außenseite aufweisen. Alternativ oder zusätzlich kann auch ein Sicherungselement wie ein Sicherungsring benutzt werden, um die Baugruppe, die den Aufnahmekörper und den Käfig umfasst, an ihrer Position im Spannerkolben zu halten.

Es wird besonders bevorzugt, dass der Käfig der erfindungsgemäßen Spannvorrichtung aus einem Kunststoffmaterial besteht. Der Aufnahmekörper kann aus Metall, vorzugsweise aus Stahl bestehen.

### Kurze Beschreibung der Zeichnungen

Weitere Vorteile und Einzelheiten der Erfindung ergeben sich aus der nachfolgenden Beschreibung eines Ausführungsbeispiels sowie anhand der Figuren. Die Figuren sind schematische Zeichnungen und zeigen:
- Fig. 1: eine teilweise geschnittene Zusammenbauzeichnung der erfindungsgemäßen hydraulischen Spannvorrichtung;
- Fig. 2: eine Explosionsansicht der in Fig. 1 gezeigten Spannvorrichtung;
- Fig. 3: eine Baugruppe mit Aufnahmekörper, Käfig und Ventilkugel; und
- Fig. 4: die in Fig. 3 gezeigte Baugruppe nach der Montage.

### Detaillierte Beschreibung der Zeichnungen

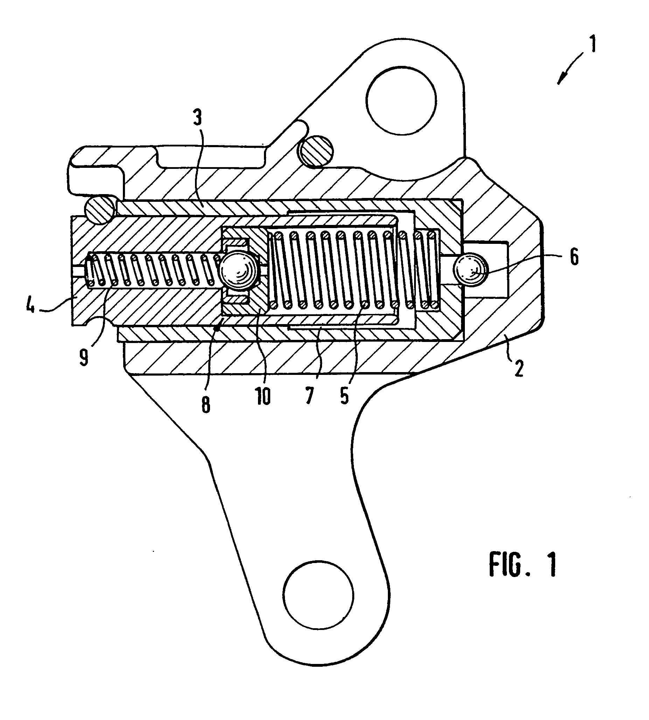

Fig. 1 zeigt eine teilweise geschnittene Zusammenbauzeichnung einer hydraulischen Spannvorrichtung. Die dargestellte Spannvorrichtung ist ein Kettenspanner und dient zum Spannen des Kettentriebs einer Brennkraftmaschine.

Die hydraulische Spannvorrichtung 1 besteht im Wesentlichen aus einem Gehäuse 2, in dem ein Spannerhydraulikelementgehäuse 3 eingesetzt ist. Im Inneren des Spannerhydraulikelementgehäuses 3 ist ein Spannerkolben 4 axial verschiebbar aufgenommen. Während des Betriebs liegt die vordere Fläche des Spannkolbens 4 an dem Kettentrieb an.

Das Spannerhydraulikelementgehäuse 3, das gleichzeitig als Zylinder für den Spannkolben 4 dient, und der Spannkolben 4 bilden einen Druckraum, der mit Hydraulikflüssigkeit, üblicherweise Motoröl, gefüllt ist. In diesem Druckraum ist eine Spannerhauptfeder 5 angeordnet, die als Druckfeder ausgebildet ist und den Spannkolben 4 so weit nach außen gegen die Kette drückt, bis ein Gleichgewicht zwischen der Federkraft und der Anpresskraft erreicht ist. Wenn der Spannkolben in Richtung auf die Kette verschoben wird, wird der Druckraum vergrößert, infolge des sich darin einstellenden Unterdrucks öffnet sich ein Rückschlagventil 6, das in Fig. 1 angedeutet ist, sodass Motoröl in den Druckraum nachströmen kann.

Wenn die Kette wieder gespannt wird, wird der Spannkolben 4 in das Spannerhydraulikelementgehäuse 3 hineingedrückt, wodurch der Druckraum verkleinert wird. Durch einen Leckspalt 7 zwischen dem Spannkolben 4 und dem Spannerhydraulikelementgehäuse 3 wird Motoröl aus dem Druckraum heraus verdrängt. Während des normalen Betriebs führt der Spannkolben 4 daher eine oszillierende Bewegung durch, wobei die Kolbenverschiebung circa 5/10 mm betragen kann. Da sich die Kette mit fortschreitendem Alter dehnt, wird der Spannkolben 4 allmählich aus dem Spannerhydraulikelementgehäuse 3 nach außen verschoben, sodass auch eine altersbedingt verlängerte Kette zuverlässig gespannt wird.

Wenn der Druck in dem Druckraum zu groß wird, öffnet ein Überdruckventil 8, sodass das Motoröl durch eine axiale Öffnung in dem Spannkolben 4 entweichen kann. Das Überdruckventil 8 umfasst eine vormontierte Baugruppe 10, bestehend aus einem Aufnahmekörper, einem Käfig und einer Ventilkugel sowie einer Überdruckfeder 9. In dem Aufnahmekörper befindet sich eine Drosselbohrung, deren Größe das Dämpfungsverhalten der Spannvorrichtung beeinflusst.

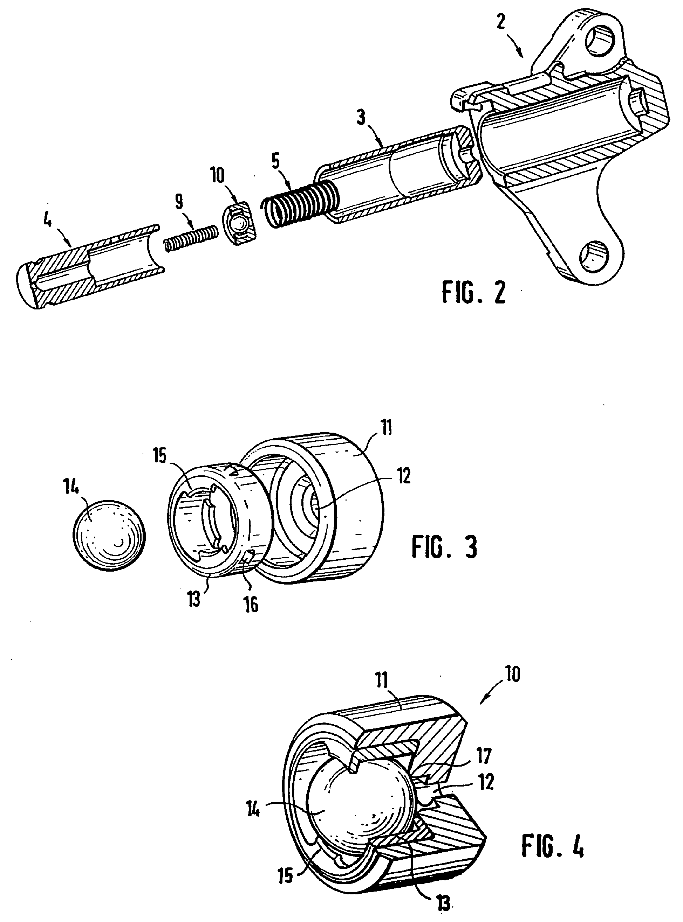

Fig. 2 zeigt eine Explosionsansicht der in Fig. 1 gezeigten Spannvorrichtung 1. Bei der Montage der Spannvorrichtung 1 wird die Überdruckfeder 9 in den senkrecht gestellten Spannkolben 4 eingesetzt, anschließend kann die vormontierte Baugruppe 10, bestehend aus Aufnahmekörper, Käfig und Ventilkugel auf die Überdruckfeder 9 gesetzt werden. Die Außenkontur der Baugruppe 10 ist an die innere Form des Spannerkolbens 4 angepasst, sodass die Baugruppe 10 in dem Spannerkolben 4 geführt wird. Auf diese Weise wird die Ventilkugel automatisch auf der Überdruckfeder 9 positioniert und zentriert. Die vormontierte Baugruppe 10 kann durch einen Montageautomaten mit der Überdruckfeder 9 zu dem Überdruckventil 8 zusammengesetzt werden.

Fig. 3 zeigt eine Baugruppe mit Aufnahmekörper, Käfig und Ventilkugel.

Der Aufnahmekörper 11 ist im Wesentlichen ringförmig ausgebildet und auf einer Seite offen. Die gegenüberliegende, in Fig. 3 hintere Seite des Aufnahmekörpers 11 ist bis auf eine Drosselbohrung 12 verschlossen. Die Außenkontur des Aufnahmekörpers 11 ist an die Innenkontur des Spannerkolbens 4 angepasst. In das Innere des Aufnahmekörpers 11 ist ein Käfig 13 einsetzbar, in den eine Ventilkugel 14 einbringbar ist. Die Ventilkugel 14 ist vorzugsweise aus Stahl hergestellt, es kommen jedoch auch die Materialien Glas, Keramik oder Kunststoff in Frage.

Der Käfig 13 weist auf einer oder auf beiden Seiten zwei gegenüberliegende radiale Vorsprünge auf, die beim Einbringen der Ventilkugel 14 in den Käfig 13 überwunden werden müssen. Der Käfig 13 kann aus einem Kunststoffmaterial bestehen, sodass die Vorsprünge 15 beim Einpressen der Ventilkugel 14 elastisch zur Seite gedrückt werden und anschließend wieder an ihre ursprüngliche Position zurückkehren. In dem dargestellten Ausführungsbeispiel sind auch an der gegenüberliegenden Seite des Käfigs 13 Vorsprünge vorgesehen, sodass die Ventilkugel 14 von beiden Seiten des Käfigs 13 montiert werden kann.

Um einen sicheren Halt des Käfigs 13 in dem Aufnahmekörper 11 zu gewährleisten, weist der Käfig 13 mehrere über den Umfang verteilte vorspringende Haltenasen 16 auf, die zu einer form- und kraftschlüssigen Verbindung führen. Bei anderen Ausführungen kann die Außenkontur des Käfigs 13 unrund ausgebildet sein, etwa in der Form eines Polygons.

Fig. 4 zeigt, die in Fig. 3 gezeigte Baugruppe 10 nach der Montage. Der Käfig 13 dient lediglich dazu, die Montage der Kugel 14 zu erleichtern, indem er die Kugel 14 sichert. Nach der Montage hat der Käfig 13 keine Funktion mehr. Durch den Käfig 13 ist die Kugel 14 automatisch zentriert, sodass sie einen im Inneren des Aufnahmekörpers 11 gebildeten Ventilsitz 17 abdichtet. Der Käfig 13 ist so ausgebildet, dass er die Axialbewegung der Kugel 14 beim Öffnen und Schließen des Ventils nicht behindert. Da die Baugruppe 10 kompakt ist, kann sie auch in kleinen Spannerkolben eingesetzt werden.

### Bezugszahlen

- 1: Spannvorrichtung
- 2: Gehäuse
- 3: Spannerhydraulikelementgehäuse
- 4: Spannkolben
- 5: Spannerhauptfeder
- 6: Rückschlagventil
- 7: Leckspalt
- 8: Überdruckventil
- 9: Überdruckfeder
- 10: Baugruppe
- 11: Aufnahmekörper
- 12: Drosselbohrung
- 13: Käfig
- 14: Ventilkugel
- 15: Vorsprung
- 16: Haltenase
- 17: Ventilsitz

## Patentansprüche

1. Hydraulische Spannvorrichtung (1) für einen Zugmitteltrieb, insbesondere für einen Ketten- oder Riementrieb einer Brennkraftmaschine, mit einem in einem Zylinder beweglich geführten Spannkolben (4), einem durch den Spannkolben (4) und den Zylinder festgelegten Druckraum zur Aufnahme von Hydraulikflüssigkeit und einem den Druck in dem Druckraum begrenzenden Überdruckventil (8), das zumindest teilweise aus einer vormontierten, in den Spannkolben (4) einsetzbaren oder eingesetzten Baugruppe (10) besteht, die einen Aufnahmekörper (11) als feststehendes Ventilelement umfasst, der mit einem ein bewegliches Ventilelement aufnehmenden Käfig (13) verbunden ist, der zumindest auf einer Seite einen oder mehrere Vorsprünge (15) aufweist, durch den oder die das bewegliche Ventilelement im Inneren des Käfigs (13) gehalten wird, wobei der käfig der Käfig (13) vorzugsweise ringförmig ausgebildet ist **dadurch gekennzeichnet, dass** der Käfig mehrere Vorsprünge (15) aufweist, wobei zwei gegenüberliegende Vorsprünge (15) auf beiden Käfigseiten ausgebildet sind.

2. Spannvorrichtung nach Anspruch 1, **dadurch gekennzeichnet, dass** das bewegliche Ventilelement als Ventilkugel (14) ausgebildet ist.

3. Spannvorrichtung nach Anspruch 1 oder 2, **dadurch gekennzeichnet, dass** an dem Aufnahmekörper (11) ein Ventilsitz (17) ausgebildet ist, der durch das bewegliche Ventilelement abdichtbar ist.

4. Spannvorrichtung nach einem der vorangehenden Ansprüche, **dadurch gekennzeichnet, dass** an dem Aufnahmekörper (11) eine Drosselbohrung (12) ausgebildet ist.

5. Spannvorrichtung nach einem der vorangehenden Ansprüche, **dadurch gekennzeichnet, dass** der Käfig (13) kraft- und/oder formschlüssig in den Aufnahmekörper (11) eingesetzt ist.

6. Spannvorrichtung nach einem der vorangehenden Ansprüche, **dadurch gekennzeichnet, dass** die Außenkontur des Käfigs unrund, insbesondere polygonförmig, ausgebildet ist.

7. Spannvorrichtung nach einem der vorangehenden Ansprüche, **dadurch gekennzeichnet, dass** der Käfig (13) aus einem Kunststoffmaterial besteht.

8. Spannvorrichtung nach einem der vorangehenden Ansprüche, **dadurch gekennzeichnet, dass** der Aufnahmekörper (11) aus Metall, vorzugsweise aus Stahl, besteht.

## Claims

1. Hydraulic tensioning device (1) for a traction mechanism drive, in particular for a chain drive or belt drive of an internal combustion engine, having a tensioning piston (4) which is moveably guided in a cylinder, having a pressure space, which is defined by the tensioning piston (4) and the cylinder, for holding hydraulic fluid, and having an overpressure valve (8) which limits the pressure in the pressure space, which overpressure valve is composed at least partially of a preassembled modular unit (10) which can be or is inserted into the tensioning piston (4) which modular unit comprises a holding body (11) as a fixed valve element which is connected to a cage (13) which holds a moveable valve element, which cage has, at least on one side, one or more projections (15) by means of which the moveable valve element is held in the interior of the cage (13), the cage (13) being preferably of annular design, **characterized in that** the cage has a plurality of projections (15), the two oppositely-situated projections (15) being formed on both sides of the cage.

2. Tensioning device according to Claim 1, **characterized in that** the moveable valve element is embodied as a valve ball (14).

3. Tensioning device according to Claim 1 or 2, **characterized in that** a valve seat (17) is formed on the holding body (11), which valve seat (17) can be sealed off by the moveable valve element.

4. Tensioning device according to one of the preceding claims, **characterized in that** a throttle bore (12) is formed on the holding body (11).

5. Tensioning device according to one of the preceding claims, **characterized in that** the cage (13) is inserted into the holding body (11) in a force-fitting and/or form-fitting manner.

6. Tensioning device according to one of the preceding claims, **characterized in that** the outer contour of the cage is of non-circular, in particular polygonal, design.

7. Tensioning device according to one of the preceding claims, **characterized in that** the cage (13) is composed of a plastic material.

8. Tensioning device according to one of the preceding claims, **characterized in that** the holding body (11) is composed of metal, preferably of steel.

## Revendications

1. Dispositif tendeur (1) hydraulique pour un entraînement à moyen de traction, en particulier pour un entraînement par chaîne ou par courroie d'un moteur à combustion interne, comprenant un piston tendeur (4) guidé de manière mobile dans un cylindre, un espace de pression défini par le piston tendeur (4) et le cylindre pour recevoir du liquide hydraulique, et une soupape de surpression (8) limitant la pression dans l'espace de pression, laquelle soupape de surpression est constituée au moins en partie d'un ensemble (10) préassemblé qui peut être inséré ou qui est inséré dans le piston tendeur (4), lequel ensemble comporte un corps de réception (11) en tant qu'élément de soupape fixe, lequel corps de réception est relié à une cage (13) recevant un élément de soupape mobile, laquelle cage comprend au moins d'un côté une ou plusieurs saillies (15) grâce à laquelle ou auxquelles l'élément de soupape mobile est maintenu à l'intérieur de la cage (13), la cage (13) étant réalisée de préférence sous forme annulaire, **caractérisé en ce que** la cage comprend plusieurs saillies (15), deux saillies (15) opposées étant réalisées des deux côtés de la cage.

2. Dispositif tendeur selon la revendication 1, **caractérisé en ce que** l'élément de soupape mobile est réalisé en tant que bille de soupape (14).

3. Dispositif tendeur selon la revendication 1 ou 2, **caractérisé en ce qu**'un siège de soupape (17) est réalisé sur le corps de réception (11), lequel siège de soupape peut être rendu étanche grâce à l'élément de soupape mobile.

4. Dispositif tendeur selon l'une quelconque des revendications précédentes, **caractérisé en ce qu**'un alésage d'étranglement (12) est réalisé sur le corps de réception (11).

5. Dispositif tendeur selon l'une quelconque des revendications précédentes, **caractérisé en ce que** la cage (13) est insérée dans le corps de réception (11) par engagement par force et/ou par engagement positif.

6. Dispositif tendeur selon l'une quelconque des revendications précédentes, **caractérisé en ce que** le contour extérieur de la cage est réalisé de manière non circulaire, en particulier sous forme polygonale.

7. Dispositif tendeur selon l'une quelconque des revendications précédentes, **caractérisé en ce que** la cage (13) est constituée d'une matière plastique.

8. Dispositif tendeur selon l'une quelconque des revendications précédentes, **caractérisé en ce que** le corps de réception (11) est constitué de métal, de préférence d'acier.
